# EUROPEAN PATENT SPECIFICATION

(11) **EP 1 332 906 B1**
(45) Date of publication and mention of the grant of the patent: **23.03.2005**
(21) Application number: 03001811.3
(22) Date of filing: 29.01.2003
(51) Int. Cl.: B60K 15/035

(54) **Method and system for controlling liquid fuel and vapor flow during refueling of a motor vehicle fuel tank**
Verfahren und Vorrichtung zum Kontrollieren des Strömens von flüssigem Kraftstoff und Dampf während des Betankens
Procédé et système de controle de débit du carburant liquide et du vapeur pendant le remplissage

(30) Priority: 31.01.2002 US 60121
(43) Date of publication of application: 06.08.2003
(73) Proprietor: EATON CORPORATION, Cleveland, Ohio 44114-2584 (US)
(72) Inventor: Benjey, Robert P., Dexter, Michigan 48130-9311 (US)
(74) Representative: Rüger, Barthelt & Abel Patentanwälte

(56) References cited:
- EP-A- 1 297 984
- US-A- 5 570 672
- US-A- 5 590 697
- US-A- 5 950 655
- US-A- 6 000 426
- US-A- 6 009 920

## Description

### BACKGROUND OF THE DISCLOSURE

The present invention relates to systems for controlling emission of fuel vapor from a vehicle fuel tank containing volatile fuel such as gasoline or alcohol or a mixture of both; and, particularly relates to such systems as they are required to function during refueling of the tank.

Currently, in passenger car and light truck vehicles, a vapor vent valve, typically float operated, has its outlet connected to a storage device, such as a charcoal filled canister, which stores fuel vapor during periods of engine shutoff. Upon engine startup, the vapors are purged from the canister to the engine air inlet.
*US-A-5,570,672 discloses a fuel evaporative emission treatment system that has a canister for absorbing evaporative fuel, a vent hose connecting a fuel tank and the canister, and a vent circulation hose connecting the vent hose and a filler neck of the fuel tank, and the sectional areas of the vent hose and the vent circulation hose connecting the vent hose and a filler neck of the fuel tank and the sectional areas of the vent hose and the vent circulation hose are set so that the ratio thereof may be a proper value. The negative pressure produced in the filler neck due to aspiration induced by refueling is cancelled out by the pressure of fuel gas circulated to the filler neck which, at one of its ends has a fuel trap formed by concavely bending an end portion of the filler neck located inside the fuel tank. At its other end the filler neck has a fuel inlet opening with a restrictor for reducing the opening area. As refueling is started with a feed nozzle inserted into the filler neck, air surrounding the feed nozzle of the feed gun is sucked into the filler neck together with fuel due to aspiration caused by the refueling. In the further course of the refueling process evaporative fuel gas is sucked in, through a small quantity of air may be sucked in from the fuel inlet opening. A evaporative gas re-circulation line is connected to the filler neck at a location downstream of said restrictor while the filler neck itself is in the form of a circular tube in this area.*

Referring to FIG. 3, a fuel vapor emission system of a *type as disclosed in US-A-5,950,655* is shown wherein the fuel tank is filled with liquid fuel to the level indicated generally at 10 and has a vapor vent valve 11 mounted in the upper surface of the tank with a flange 12 registering against and sealed on the outer surface of the upper tank wall. A filler tube 13 is provided with its lower end connected in the tank; and, tube 13 has a nozzle-receiving enlarged inlet portion at the upper end thereof as denoted by 14 which is of the capless type. The nozzle receiving end portion 14 has therein a nozzle seal 15 into which is received, during refueling, a fuel nozzle 16 and which is sealed thereabout by seal 15. The enlarged upper end 14 of the filler tube also has disposed therein and located downstream of the seal 15 a normally closed flapper valve 17 which is opened upon the insertion of the nozzle 16. When the nozzle 16 is withdrawn, valve 17 closes and seals the opening of tube end 14.

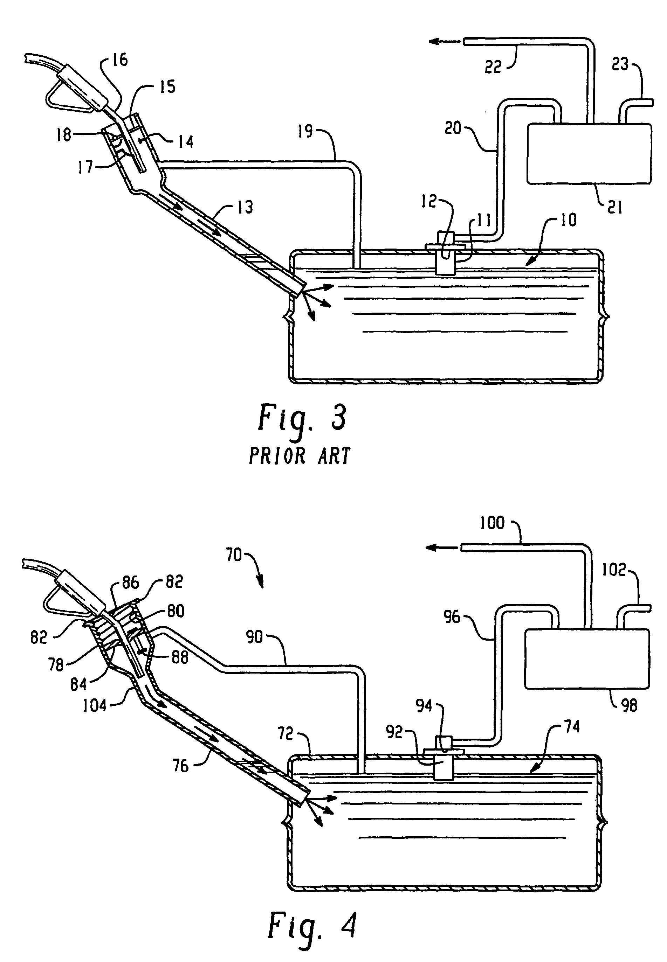

It will be understood that if alternatively a separate removable filler cap (not shown) is employed on the open end of upper portion 14 of filler tube 13 in the system of FIG. 3, the sealing flapper valve 17 may be eliminated.

A pressure release valve 18 is provided to release in the event of excessive vapor pressure build up and to permit bypass flow around seal 15. A vapor recirculation tube 19 has one end communicating with the filler tube upper end 14; and, the opposite end of tube 19 is connected to communicate into the tank through preferably the upper wall and the inlet thereto is positioned at a desired level in the tank for permitting vapor recirculation until the end of the tube is closed by the rising level of the liquid fuel 10.

In the known system of FIG. 3, the vapor vent valve 11 has its outlet connected to communicate, through a hose 20, preferably to the inlet of a vapor storage canister 21, which has an outlet tube 22 adapted for connection to the air inlet of the vehicle engine. The canister 21 has an air inlet 23 which admits purge air when stored vapor is drawn from the canister during engine operation.

In the known systems such as that shown in FIG. 3, the filler nozzle has, typically, a sensing device set to automatically shut off flow in the nozzle when a negative pressure is sensed about the nozzle. Normally, during refueling, the fuel vapor as recirculated through tube 19 the tank makes up or compensates for any aspirating effect of the fuel flowing from the nozzle and prevents premature nozzle shut off. When the liquid fuel level rises to a height to cover the end of tube 19 vapor recirculation is stopped; and, the continued flow of fuel from the nozzle by its flow effect tends to create a slightly negative gauge pressure in the region around the nozzle. Upon stopping of vapor recirculation, the sensing device (not shown) in the nozzle responds to the negative pressure and automatically shuts off flow from the nozzle 16. Upon further rising of the fuel level, the vent valve 12 is closed by the float therein and stops any vapor communication between the tank and the canister 21.

However, where the seal 15 leaks air, which has been a recurring problem in service, the leakage air flow therethrough can make up or compensate for the aspirating or flow effect of fuel dispensing from nozzle 16; and, when tube 19 is closed and vapor recirculation stopped by the rising fuel, a negative pressure is not formed in tube 14 around the nozzle. Consequently the nozzle does not automatically shut off; and, filler tube 13 and upper end 14 fill with liquid fuel and overflow or "spit-back" occurs permitting fuel spillage and consequent undesired vapor emission to the atmosphere.

Thus, it has been desired to find a way or means of controlling the fuel vapor emission during refueling of motor vehicle fuel tanks in such a way as to ensure proper nozzle shutoff and to prevent overfilling and fuel spillage.

### BRIEF SUMMARY OF THE INVENTION

The present invention as claimed in independent claims 1 and 6, respectively, provides a fuel vapor emission control system for a motor vehicle fuel tank which is effective to provide recirculation of fuel vapor during refueling and in one embodiment includes a one way check valve in the vapor recirculation line which is connected at one end to the fuel vapor valve outlet and at the opposite end to provide flow of vapor to the upper end of the filler tube downstream of the nozzle seal. In another embodiment, the recirculation line has the end positioned at a desired cut-off level of fuel in the tank and the opposite end connected to the filler tube downstream of the nozzle seal. The system of the present invention maintains the recirculation line operable to recirculate vapors at all levels of liquid fuel in the tank and provides a "dynamic seal" about the dispensed liquid fuel flow and the inside of the filler tube and if the refueling nozzle seal leaks and ensures a negative pressure in the filler tube and continued recirculation of vapor and ensures activation of the automatic shutoff in the filler nozzle to prevent over filling.

### BRIEF DESCRIPTION OF THE DRAWINGS

FIG. 1 is a pictorial representation of one embodiment of the fuel vapor control system of the present invention;

FIG. 2 is an enlarged cross-section of the check valve of the system of FIG. 1;

FIG. 3 is a view similar to FIG. 1, of a Prior Art system; and,

FIG. 4 is a view similar to FIG. 1 of another embodiment of the present invention.

### DETAILED DESCRIPTION OF THE PREFERRED EMBODIMENT

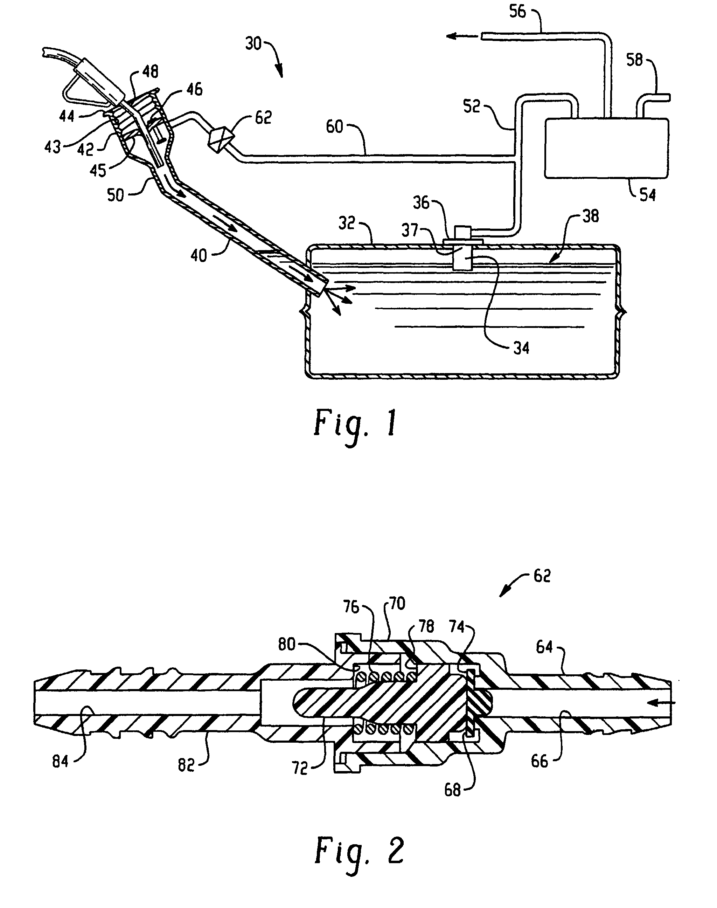

Referring to FIG. 1, one embodiment of the system of the present invention is indicated generally at 30 and has the vehicle fuel tank 32 provided with a fuel vapor vent valve 34, which may be float operated and which has the outlet thereof communicating exteriorly of the tank. Valve 34 may be of the type having a flange 36 registering against the outer surface of the upper wall of the tank, with the float mechanism and inlet of the valve extending into the interior of the tank through an access opening 37 in the wall of the tank. In such an arrangement, the flange of the valve is sealed over the access opening, preferably by weldment for plastic tanks or by mechanical seal in the case of a metal tank. The level of the liquid fuel in the tank is indicated generally at 38.

The tank has a filler tube 40 with the lower end thereof connected through the wall of the tank to provide fuel flow to the tank interior upon refueling. The upper end of filler tube 40 extends above the tank and has an enlarged portion 42. In the illustrated embodiment 30, portion 42 is of the type requiring a filler cap (not shown) and for which end 42 has interval threads 43 and an outwardly extending flange 44 adapted for engaging the unshown filler cap.

A nozzle receiving seal 45 is provided in the upper end 42; and, a pressure relief valve 46 may also be provided in the end 42 to bypass seal 45 and prevent excessive pressure buildup of fuel vapor in the system.

Filler tube enlarged portion 42 communicates with a smaller diameter portion or neck of tube 40 which is configured to closely fit about a dispensing nozzle 48 upon insertion therein. In the present practice of the invention, the inside diameter of the neck 50 is sized to be in the range of about 1.2 times the outside diameter of the filler nozzle 48 to ensure a dynamic seal between the inside of the filler tube and the stream of liquid fuel flowing from the nozzle during refueling; and, thus by the effect of the flow creates a resultant pressure reduction or negative pressure upstream of the liquid seal. It will be understood that the nozzle 48 is of the type having incorporated therein an automatic shutoff device (not shown) responsive to negative pressure around the tip region of the nozzle to cut off flow in the nozzle.

Alternatively, if desired enlarged end 42 may be arrange as a capless filler by employing a flapper door below or downstream of seal 45 which closes and seals upon nozzle removal.

The vapor vent valve 34 on the tank has its outlet communicating exteriorly of the tank and connected to one end of a conduit 52 which has its opposite end connected to the inlet of a storage device which may be a charcoal filled canister 54 having its outlet 56 adapted for connection to the air inlet of an engine. Canister 54 is provided with an atmospheric air inlet 58 for purging the canister during engine operation.

In the embodiment of FIG. 1, recirculation line 60 has one end connected into vapor conduit 52; and, line 60 has an opposite end thereof connected to the inlet of a one-way valve, indicated generally at 62, which has its outlet connected to the upper end 42 of the filler tube at a location downstream of the nozzle seal 45.

Referring to FIG. 2, one version of valve 62 which has been found satisfactory is shown in enlarged cross-section and has an inlet fitting 64 adapted for connection to the recirculation line 60, with an inlet passage 66 therethrough which has an annular valve seat 68 formed there around on the interior of the valve body 70. A sliding plunger 72 has one end thereof in contact with the surface of a movable resilient valve member 74 which seats on the annular valve seat 68. Plunger 72 is biased in a rightward direction in FIG. 2 into contact with the valve member 74 and urges the valve member into contact with the valve seat 68. The bias force on the plunger 72 is provided by a spring 76 which has one end registered against an annular shoulder 78 formed on the plunger. The opposite end of the spring is registered against an annular surface 80 formed in a fitting 82 attached to the valve body 70 forming a closure thereon and defining an outlet passage 84; and, fitting 82 is adapted for connection to a hose (not shown) for connection to the upper end 42 of the filler tube.

It will be understood that a relatively light load on the valve member is provided by spring 76 which has a relatively low spring rate; and, in the event the pressure in upper end 42 is less than the pressure in line 60, caused by flow of fuel through nozzle 48 into tube 40 check valve 62 is caused to open and to permit vapor from vent valve 34 to recirculate into the upper end 42 of the filler tube.

It will be understood that the particular version of the valve 62 shown and illustrated in FIG. 2 is not inclusive; and, other forms of valve 62 may be employed such as, for example, a diaphragm or duck-bill valve.

In operation during refueling, sufficient vapor is recirculated through conduit 60 and one-way valve 62 to prevent premature nozzle shutoff. However when vapor vent valve 34 is closed by the float therein responding to the fuel level reaching the desired level, vapor flow is stopped in conduit 52 and conduit 60. The fuel vapor pressure in the tank then increases causing liquid fuel to back up in the filler tube and cover the discharge end of the nozzle, which in turn activates the shutoff mechanism (not shown) in the nozzle.

The present invention thus provides low cost and simple way of maintaining recirculation of fuel vapor from a tank to the filler tube during refueling, and by virtue of a dynamic seal about the liquid fuel stream discharging from the dispensing nozzle ensures a negative pressure in the filler tube when vapor recirculating is shut off by rising fuel level in the tank; and, the dynamic seal is sufficiently effective that the liquid flow effect overcomes any air leaks through the nozzle seal and ensures proper nozzle automatic shut off and thus avoids overfill and spillage.

Referring to FIG. 4, an alternate embodiment of the invention is indicated generally at 70 and includes a tank 72 with liquid fuel therein at a level indicated generally at 74 with a filler tube 76 having one end communicating through the wall of the tank; and, tube 76 has its opposite end extending upwardly to an enlarged open upper end 78. The enlarged upper end 78 has internal threads 80 and an outwardly extending annular flange 82 which are adapted for engagement with a closure or filler cap (not shown) in a manner well known in the design of motor vehicle fuel systems.

The enlarged tube upper end 78 includes a seal 84 disposed internally thereof which is operable to seal about a refueling nozzle 86 when inserted therein for refueling as shown in FIG. 4. If desired a separate pressure relief valve 88 may be provided for bypassing seal 84 and preventing excessive pressure buildup in the system. It will be understood that nozzle 86 is of the type having an automatic shutoff device therein (not shown) responsive to negative pressure around the nozzle to shut off flow therefrom.

A vapor recirculation line 90 *including a one-way valve (not shown)* has one end thereof communicating through the wall of the tank to terminate at a desired upper level 74 of the fuel at which the dispensing nozzle 86 is to be shut off. The upper or opposite end of the conduit 90 is connected through the wall of the enlarged diameter upper end 78 of the filler tube at a station downstream or just below the nozzle seal 84. The recirculation conduit is thus operative to provide vapor recirculation to the filler tube upper end 78 until the fuel level 74 rises to cover the lower end of the conduit 90 and stop vapor flow in line 90.

A vent valve 92 preferably float operated is disposed through an access opening in the upper wall of the tank and is secured thereover by any suitable expedient such as, for example, welding of a flange 94 to the upper wall of the tank. The outlet of the valve 92 extends exteriorly of the tank and is connected for communication with a remotely located canister 98 preferably through a hose 96. Canister 100 may be of the type which has an outlet tube 100 adapted for connection to an air inlet and may have an atmospheric air purge inlet tube 102.

The system 70 includes a reduced diameter or neck portion 104 formed on the filler tube 76 adjacent the large portion 78 and which neck portion 104 is sized to closely interfit the refueling nozzle 86. In the presently preferred practice of the invention, the inside diameter of the neck 104 is about 1.2 times the outside diameter of the nozzle 86. In the present practice of the invention, for a nozzle having an outside diameter (OD) of 21 millimeters, the neck 104 has an inside diameter (ID) of about 25.4 millimeters. Thus, the inside diameter of the neck 104 closely interfits the outside diameter of the nozzle 86 to effect a dynamic seal between the inside diameter of the neck 104 and the stream of fuel discharging from the end of the refueling nozzle 86. Thus, the flow effect and the dynamic seal cause a reduction in pressure in the inside of the enlarged diameter portion 78 unless sufficient makeup vapor is supplied through recirculation conduit 90. Furthermore, in the event of air leakage past seal 84, the flow effect is sufficient to overcome the air leakage and create a negative pressure within the upper end 78 when the fuel level closes the circulation conduit 90.

The present invention thus provides recirculation of fuel vapor during refueling through the filler tube for minimizing the vapor flow to the storage canister; and, when the liquid fuel has reached the desired level in the tank the invention ensures that a sufficiently negative pressure in the filler tube is present to activate the automatic shutoff in the nozzle.

Although the invention has hereinabove been described with respect to the illustrated embodiments, it will be understood that the invention is capable of modification and variation and is limited only by the following claims.

## Claims

1. A system for controlling flow of liquid fuel and vapor during refueling of a motor vehicle fuel tank *(32)* with a filler tube *(40)* for receiving a fuel dispensing nozzle comprising:
(a) a vent valve *(34)* disposed in the tank and having an inlet communicating with the vapor dome in the tank *(32)* and an outlet communicating with a remote vapor storage device *(54)*;
(b) a seal *(45)* disposed in the filler tube *(40)* and operable for sealing about the nozzle upon insertion therein;
(c) a recirculation conduit *(60) including a one-way valve (62) and* connected to admit fuel vapor to the filler tube *(40)* at a location downstream of the seal *(45)*; and,
(d) a neck portion *(50)* in the filler tube *(40)* downstream of the location of said recirculation conduit connection location, wherein said neck has the inner periphery thereof sized to receive the nozzle (*48*) in closely fitting arrangement and to form an effective dynamic seal about liquid discharging from the nozzle.

2. The system defined in claim 1, wherein said vent valve outlet is connected to a hose (52) connected to said storage device (54); and, said recirculation conduit (60) has an end thereof connected to said hose (52).

3. The system defined in claim 1, wherein said recirculation conduit (90) has one end connected through the wall of the tank and an end opposite said one end connected to said filler tube (40) at said location.

4. The system defined in claim 1, wherein said vent valve is float operated.

5. The system defined in claim 1, wherein said neck portion has its inner diameter sized about 1.2 times the nozzle outside diameter.

6. A method of controlling flow of liquid fuel and fuel vapor during refueling from a dispensing nozzle (48) of a vehicle fuel tank (32) having a filler tube (40) comprising:
(a) disposing a fuel vapor vent valve (34) with the tank (32) and communicating the valve inlet with the vapor dome in the interior of the tank and communicating the vent valve outlet to a fuel vapor storage device *(54);*
(b) disposing a seal *(45)* in the filler tube *(40)* for sealing about the dispensing nozzle (48) upon insertion in the filler tube;
(c) recirculating fuel vapor through a one-way valve (62) to the filler tube *(40)* at a location downstream of the nozzle seal *(45)*; and,
(d) sizing a neck portion of the filler tube *(40)* for effecting a dynamic seal between the inner surface of the said neck portion and fuel discharging from the nozzle.

7. The method defined in claim 6, wherein said step of recirculating includes connecting one end of a conduit (90) through the tank wall and connecting an end opposite the one end to the filler tube (40) at said location.

8. The method defined in claim 7, wherein said step of communicating the vent valve outlet includes connecting a hose (52) from the valve outlet to the storage device (54) and said step of recirculating includes connecting a line (60) from the hose (52) to the filler tube (40) at said location.

9. The method defined in one of claims 6 to 8, wherein the step sizing a portion of the filler tube (40) includes sizing the inner diameter of the portion about 1.2 times the nozzle outside diameter.

## Patentansprüche

1. System zur Steuerung der Strömung von flüssigem Kraftstoff und Dampf während des Betankens eines Kraftfahrzeugkraftstofftanks (32) mit einem Füllrohr (40) zur Aufnahme eines Kraftstoff abgebenden Zapfhahns, wobei zu dem System gehören:
(a) ein Entlüftungsventil (34), das in dem Tank angeordnet ist und einen Einlass, der mit dem Dampfdom in dem Tank (32) strömungsmäßig verbunden ist, sowie einen Auslass aufweist, der mit einer entfernt angeordneten Dampfspeichervorrichtung (54) strömungsmäßig verbunden ist;
(b) eine Dichtung (45) die in dem Füllrohr (40) angeordnet ist und dazu dient, den Zapfhahn abzudichten, wenn dieser darin eingeführt wird;
(c) eine Umlaufleitung (60), die ein Einwegventil (62) enthält und derart angeschlossen ist, um Kraftstoffdampf dem Füllrohr (40) an einer Stelle stromabwärts der Dichtung (45) zuzuführen; und
(d) ein Einfüllstutzenabschnitt (50) in dem Füllrohr (40) stromabwärts der Stelle des Anschlussorts der Umlaufleitung, wobei der Innenumfang des Stutzens derart bemessen ist, um den Zapfhahn (48) in einer eng passenden Anordnung aufzunehmen und eine effektive dynamische Dichtung über der aus dem Zapfhahn austretenden Flüssigkeit zu bilden.

2. System nach Anspruch 1, wobei der Auslass des Entlüftungsventils an einen Schlauch (52) angeschlossen ist, der mit der Speichervorrichtung (54) verbunden ist, und wobei ein Ende der Umlaufleitung (60) an dem Schlauch (52) angeschlossen ist.

3. System nach Anspruch 1, wobei ein Ende der Umlaufleitung (90) durch die Wand des Tanks hindurch ragend befestigt ist und ein dem einen Ende gegenüberliegendes Ende an der genannten Stelle an dem Füllrohr (40) angeschlossen ist.

4. System nach Anspruch 1, wobei das Entlüftungsventil durch einen Schwimmer betätigt ist.

5. System nach Anspruch 1, wobei der Einfüllstutzenabschnitt einen Innendurchmesser aufweist, der ungefähr 1,2 Mal so groß wie der Außendurchmesser des Zapfhahns bemessen ist.

6. Verfahren zur Steuerung der Strömung von flüssigem Kraftstoff und Kraftstoffdampf während des Betankens eines Fahrzeugkraftstofftanks (32) mit einem Füllrohr (40) mit Kraftstoff aus einem Zapfhahn (48), wobei zu dem Verfahren die Schritte gehören, wonach:
(a) ein Kraftstoffdampfentlüftungsventil (34) in dem Tank (32) angeordnet wird und der Ventileinlass mit dem Dampfdom in dem Innenraum des Tanks strömungsmäßig verbunden wird, während der Entlüftungsventilauslass mit einer Kraftstoffdampfspeichervorrichtung (54) strömungsmäßig verbunden wird;
(b) eine Dichtung (45) in dem Füllrohr (40) angeordnet wird, um den Zapfhahn (48) beim Einführen in das Füllrohr abzudichten;
(c) Kraftstoffdampf über ein Einwegventil (62) zu dem Füllrohr (40) an einer Stelle stromabwärts der Zapfhahndichtung (45) zurückgeführt wird; und
(d) ein Stutzenabschnitt des Füllrohrs (40) derart bemessen wird, um eine dynamische Dichtung zwischen der Innenfläche des Stutzenabschnitts und dem aus dem Zapfhahn austretenden Kraftstoff zu bewirken.

7. Verfahren nach Anspruch 6, wobei der Rückführungsschritt den Anschluss eines Endes einer Leitung (90) durch die Tankwand hindurch sowie den Anschluss eines zu dem einem Ende entgegengesetzten Endes an dem Füllrohr (40) an der genannten Stelle enthält.

8. Verfahren nach Anspruch 7, wobei der Schritt der strömungsmäßigen Verbindung des Entlüftungsventilauslasses den Anschluss eines Schlauches (52) von dem Ventilauslass zu der Speichervorrichtung (54) enthält und der Rückführungsschritt den Anschluss einer Leitung (60) von dem Schlauch (52) zu dem Füllrohr (40) an der genannten Stelle enthält.

9. Verfahren nach einem der Ansprüche 6 bis 8, wobei der Schritt der Bemessung eines Abschnitts des Füllrohrs (40) umfasst, dass der Innendurchmesser des Abschnitts ungefähr 1,2 Mal so groß wie der Außendurchmesser des Zapfhahns dimensioniert wird.

## Revendications

1. Système pour commander le flux ce carburant liquide et de vapeur pendant le remplissage du réservoir (32) de carburant d'un véhicule à moteur avec une conduite de remplissage (40) pour recevoir un pistolet de distribution de distribution de carburant comprenant :
(a) une soupape de mise à l'air libre (34) disposée dans le réservoir et ayant une entrée qui communique avec la calotte gonflable dans le réservoir (32) et une sortie qui communique avec un dispositif (54) de stockage de vapeur à distance ;
(b) un joint d'étanchéité (45) placé dans la conduite de remplissage (40) et que l'on peut faire fonctionner pour étanchéifier le tour de la buse lors de son insertion à l'intérieur ;
(c) une conduite de recyclage (60) *comprenant une soupape* à *une voie* (62) et connectée pour admettre la vapeur de carburant dans la conduite de remplissage (40) à un emplacement en aval du joint d'étanchéité (45) ; et
(d) une partie de col (50) dans la conduite de remplissage (40) en aval de l'emplacement de connexion de ladite conduite de recyclage, dans laquelle ledit col a sa périphérie intérieure dimensionnée pour recevoir la buse (48) en arrangement d'adaptation serré et pour former un joint d'étanchéité dynamique efficace autour du liquide s'évacuant depuis la buse.

2. Système défini dans la revendication 1, dans lequel la sortie de ladite soupape de mise à l'air libre est connectée à un tuyau (52) connecté audit dispositif de stockage (54) ; et, ladite conduite de recyclage (60) a une extrémité connectée audit tuyau (52).

3. Système défini dans la revendication 1, dans lequel ladite conduite de recyclage (90) a une extrémité connectée à travers la paroi du réservoir et une extrémité opposée à ladite une extrémité connectée à ladite conduite de remplissage (40) audit emplacement.

4. Système défini dans la revendication 1, dans lequel ladite soupape de mise à l'air libre fonctionne avec un flotteur.

5. Système défini dans la revendication 1, dans lequel ladite partie de col a son diamètre intérieur d'une dimension qui est de 1,2 fois le diamètre extérieur de la buse.

6. Procédé pour commander le flux de carburant liquide et de vapeur de carburant pendant le remplissage du carburant à partir d'un pistolet de distribution (48) d'un réservoir de carburant d'un véhicule (32) ayant une conduite de remplissage (40) comprenant :
(a) la disposition d'une soupape de mise à l'air libre (34) de la vapeur de carburant sur le réservoir (32) et la mise en communication de l'entrée de la soupape de mise à l'air libre avec la calotte gonflable dans l'intérieur du réservoir et la mise en communication de la sortie de la soupape de mise à l'air libre avec un dispositif de stockage (54) de la vapeur de carburant ;
(b) la disposition d'un joint d'étanchéité (45) dans la conduite de remplissage (40) pour rendre étanche le tour du pistolet de remplissage (48) lors de l'insertion dans la conduite de remplissage ;
(c) le recyclage de la vapeur de carburant à travers une soupape à une voie (62) vers la conduite de remplissage (40) à un emplacement en aval du joint d'étanchéité de la buse (45) ; et,
(d) le calibrage d'une partie de col de la conduite de remplissage (40) pour faire un joint dynamique entre la surface intérieure de ladite partie de col et l'évacuation de carburant depuis la buse.

7. Procédé défini dans la revendication 6, dans lequel ladite étape de recyclage comprend la connexion d'une extrémité d'une conduite (90) à travers la paroi du réservoir et la connexion d'une extrémité opposée à la une extrémité de la conduite de remplissage (40) audit emplacement.

8. Procédé défini dans la revendication 6, dans lequel ladite étape de mise en communication de la sortie de soupape de mise à l'air libre comprend la connexion d'un tuyau (52) depuis la sortie de la soupape au dispositif de stockage (54) et ladite étape de recyclage comprend la connexion d'un conduit (60) depuis le tuyau (52) jusqu'à la conduite de remplissage (40) audit emplacement.

9. Procédé défini dans l'une des revendications 6 à 8, dans lequel ladite étape de calibrage d'une partie de la conduite de remplissage (40) comprend le calibrage du diamètre intérieur de la partie de 1,2 fois environ le diamètre extérieur de la buse.
